# FASCICULE DE BREVET EUROPEEN

(11) **EP 3 559 416 B1**
(45) Date de publication et mention de la délivrance du brevet: **02.09.2020**
(21) Numéro de dépôt: 17832264.0
(22) Date de dépôt: 21.12.2017
(51) Int. Cl.: F01D 5/02, F01D 21/04, F02K 3/06

(54) **TURBOMACHINE COMPORTANT UN MOYEN DE DECOUPLAGE D'UNE SOUFFLANTE**
TURBOMASCHINE MIT EINEM MITTEL ZUR ENTKOPPLUNG EINES LÜFTERS
TURBOMACHINE COMPRISING A MEANS FOR DECOUPLING A FAN

(30) Priorité: 23.12.2016 FR 1663359
(43) Date de publication de la demande: 30.10.2019
(73) Titulaire: Safran Aircraft Engines, 75015 Paris (FR)
(72) Inventeur: BRAULT, Michel, Gilbert, Roland, 77550 Moissy-Cramayel (FR); BECOULET, Julien, Fabien, Patrick, 77550 Moissy-Cramayel (FR); NEGRI, Arnaud, Nicolas, 77550 Moissy-Cramayel (FR); YVON, Didier, Jean-Louis, 77550 Moissy-Cramayel (FR)
(74) Mandataire: Gevers & Orès
(86) Numéro de dépôt international: PCT/FR2017/053765
(87) Numéro de publication internationale: WO 2018/115763

(56) Documents cités:
- FR-A1- 2 541 724
- US-A- 4 827 712
- US-A1- 2013 324 343
- US-A1- 2015 377 027

## Description

Le domaine de la présente invention est celui des turbomachines aéronautiques et, plus particulièrement celui des turbomachines à double flux comportant un dispositif de réduction pour l'entraînement de la soufflante.

Classiquement, les turbomachines comprennent, en partant de l'amont, un ou plusieurs modules de compresseur disposés en série, qui compriment de l'air aspiré dans une entrée d'air. L'air est ensuite introduit dans une chambre de combustion où il est mélangé à un carburant et brûlé. Les gaz de combustion passent à travers un ou plusieurs modules de turbine qui entraînent le ou les compresseurs par l'intermédiaire d'arbres de turbine associés. Les gaz sont enfin éjectés soit dans une tuyère pour produire une force de propulsion soit sur une turbine libre pour produire de la puissance qui est récupérée sur un arbre de transmission.

Les turbomachines à double flux actuelles à fort taux de dilution comportent plusieurs étages de compresseur, notamment un compresseur basse pression (BP) et un compresseur haute pression (HP), traversés par un flux primaire. Ces compresseurs basse pression (BP) et haute pression (HP) sont chacun entrainés par un arbre de turbine basse pression (BP) ou haute pression (HP) respectif associé. En amont du compresseur basse pression (BP) est disposée une roue comportant des pales ou aubes mobiles de grande dimension, ou soufflante, qui alimente à la fois le flux primaire traversant les compresseurs BP et HP et un flux froid, ou flux secondaire, qui est dirigé directement vers une tuyère de flux froid, dite tuyère secondaire. La soufflante est entraînée par l'arbre de rotation de turbine BP du corps BP et tourne généralement à la même vitesse que lui.

Il peut être intéressant de faire tourner la soufflante à une vitesse de rotation inférieure à celle de l'arbre BP, notamment lorsque celle-ci est de très grande dimension, dans le but de mieux l'adapter aérodynamiquement. Pour cela, on dispose un dispositif de réduction entre l'arbre de turbine BP et un arbre de soufflante, qui est porteur de la soufflante. Une telle configuration est notamment décrite dans les demandes de brevet FR-1.251.655 et FR-1.251.656 déposées le 23 février 2012.

Dans cette configuration, il peut survenir que la soufflante perde une pale, par exemple en cas d'ingestion d'un corps étranger tel qu'un oiseau. Ce phénomène, aussi connu sous le vocable anglo-saxon appelé de « Fan Blade Out » (FBO) provoque une excentration de la soufflante ayant pour conséquence de provoquer un contact des extrémités de ses pales avec le carter de la soufflante. Ce contact peut freiner brutalement la soufflante alors même que le dispositif de réduction et l'arbre de turbine sont toujours entraînés par la turbine BP, ce qui peut créer un couple de torsion élevé dans l'arbre de turbine BP et dans le dispositif de réduction.

La torsion des arbres peut conduire à des ruptures des arbres en différents points de la turbomachine, comme cela est enseigné par le document EP-2.048.330-A2.

Le document EP-2.048.330-A2 divulgue une turbomachine comportant un arbre de soufflante et un arbre d'un compresseur entraînés chacun par un arbre de turbine par l'intermédiaire de deux chemins de couple différents accouplés à l'arbre de turbine au niveau d'une intersection agencée au niveau d'un palier. Le chemin de couple entraîne la soufflante par l'intermédiaire d'un dispositif de réduction. Les deux chemins de couple sont prévus pour que, en cas de rupture fortuite d'un des chemins de couple la turbine demeure en charge sur l'autre chemin de couple afin d'éviter les surrégimes de la turbine, pendant qu'une unité de contrôle de la turbine peut réduire le régime de la turbine. La turbomachine décrite dans ce document part du constat qu'un possible dysfonctionnement mécanique des chemins de couple peut se produire, comme par exemple celui qui lie l'arbre de turbine à la soufflante. Toutefois ce document ne précise pas explicitement la nature de ce dysfonctionnement, qui peut ou non consister en une rupture, mais qui est en tous cas fortuit et non prévisible. Dans le cas d'une rupture du chemin de couple l'arbre de turbine à la soufflante, cette rupture fortuite intervient alors que le dispositif de réduction a d'ores et déjà été soumis à des couples importants et a vraisemblablement déjà été endommagé.

Le document EP-1.439.316-B1 décrit et représente une turbomachine comportant une soufflante accouplée à une ligne d'arbre par l'intermédiaire d'un dispositif de réduction. Un dispositif de découplage, qui est interposé entre un arbre de la soufflante et le dispositif de réduction permet le découplage de l'arbre de soufflante en cas de perte d'une pale de celle-ci. Le déclenchement du découplage du dispositif de découplage repose sur un déplacement axial de l'arbre de soufflante dû à la détection d'un balourd causé par la perte d'une pale de la soufflante. Le dispositif comporte une première bride solidaire d'un support palier de l'arbre de soufflante et une deuxième bride solidaire du carter, agencée en regard de la première bride, qui entoure cet arbre, et qui est accouplée à la première bride par un premier jeu de vis fusibles. Le balourd provoque la rupture du premier jeu de vis axiales fusibles, ce qui provoque la désolidarisation axiale et l'avancée de l'arbre de soufflante. Le dispositif comporte par ailleurs, en aval de ces brides, deux plateaux d'un accouplement à dentures droites. Un premier plateau est lié à l'arbre de soufflante et un second plateau est lié à un arbre d'entrée du dispositif de réduction. Ces plateaux sont accouplés par un deuxième jeu de vis fusibles. Lorsque le premier jeu de vis axiales fusibles est rompu, l'arbre de soufflante avance et entraîne le premier plateau de manière que les têtes du deuxième jeu de vis axiales fusibles heurtent la deuxième bride solidaire du carter et se rompent par cisaillement, ce qui provoque la rupture de l'accouplement.

Cette conception présente l'inconvénient de ne soumettre la rupture de l'accouplement entre l'arbre de soufflante et le dispositif de réduction qu'à la présence d'un balourd s'exerçant sur la soufflante, et de ne pas prendre en compte le couple de torsion résistant s'exerçant entre la soufflante et le dispositif de réduction. En particulier, ce dispositif ne peut pas permettre le découplage de la soufflante en cas de grippage du dispositif de réduction.

En outre, ce dispositif présente l'inconvénient de déclencher la rupture de l'accouplement dès lors qu'un balourd est présent dans la soufflante, et peut donc déclencher la rupture de l'accouplement alors même que la soufflante, quoique fonctionnant avec un balourd, n'oppose pas de couple à même de perturber le fonctionnement du dispositif de réduction et de la turbomachine. En outre, ce dispositif est particulièrement encombrant axialement puisqu'il nécessite pour son fonctionnement un découpleur axial sur les paliers de l'arbre de soufflante disposé à la suite axialement, et des dégagements correspondants aux mouvements de ces pièces.

Il est souhaitable de limiter le couple résistant s'exerçant entre l'arbre de soufflant et le dispositif de réduction quelle que soit son origine, que ce couple ait pour origine la perte d'une pale, ou au contraire, un blocage du dispositif de réduction.

D'une part, en effet, l'existence d'un couple de torsion résistant élevé en entrée du dispositif de réduction en cas de perte de pale risque d'endommager gravement ledit dispositif de réduction, qui pourrait alors se bloquer et rendre la rotation de la soufflante impossible. Inversement, un blocage fortuit du dispositif de réduction pourrait bloquer la soufflante et rendre sa rotation impossible.

Dans les deux cas, ceci aurait pour conséquence d'augmenter brutalement la trainée aérodynamique du moteur, rendant l'avion impossible à piloter.

Pour remédier à cet inconvénient, une solution consiste à limiter le couple de torsion susceptible de s'exercer entre l'arbre de soufflante et le dispositif de réduction, afin d'éviter le blocage de la soufflante.

Par ailleurs, la limitation de ce couple permet d'éviter tout surdimensionnement des organes du dispositif de réduction et de l'arbre de turbine basse pression, et par conséquent d'alléger la conception du dispositif de réduction et de l'arbre de turbine BP.

Dans ce but, l'invention propose une turbomachine du type décrit précédemment, caractérisée en ce que le dispositif de réduction est accouplé à l'arbre de soufflante par l'intermédiaire d'un accouplement à dentures trapézoïdales de type curvic qui comporte lesdits moyens de découplage, lesdits moyens de découplage étant configurés pour découpler le dispositif de réduction et l'arbre de soufflante en réponse au dépassement d'un couple résistant déterminé dit couple de découplage s'exerçant entre l'arbre de soufflante et le dispositif de réduction.

Avantageusement, le découplage est donc un événement prévu en réponse au dépassement d'un couple résistant déterminé s'exerçant entrer le dispositif de réduction et l'arbre de soufflante, c'est-à-dire conditionné par le dépassement de ce couple résistant. De plus, le découplage est effectué quelle que soit l'origine de ce couple résistant.

Selon d'autres caractéristiques de la turbomachine :
- les dentures de l'accouplement à dentures trapézoïdales de type curvic s'étendent axialement et il comporte deux plateaux d'accouplement dentés engrenant l'un avec l'autre et fixés l'un à l'autre par l'intermédiaire de vis axiales fusibles formant les moyens de découplage.
- les plateaux comportent chacun deux jeux coaxiaux de dentures trapézoïdales, et les vis axiales fusibles traversent des perçages formés dans les plateaux et disposés sensiblement selon un rayon intermédiaire entre les deux jeux coaxiaux de dentures,
- les vis axiales fusibles comportent chacune un tronçon de diamètre réduit, formant amorce de rupture et disposé entre deux tronçons principaux de diamètre supérieur audit tronçon de diamètre réduit,
- des angles d'inclinaison de plans inclinés des dentures trapézoïdales, le nombre de vis fusibles, les diamètres des tronçons de rupture et principal des vis fusibles, et un couple de serrage desdites vis fusibles sont configurés pour permettre la rupture desdites vis fusibles dès lors qu'un couple exercé entre les plateaux de l'accouplement excède le couple de découplage,
- le dispositif de réduction est un réducteur de type épicycloïdal, un planétaire est entraîné en rotation par un arbre de turbine de la turbomachine, au moins un porte-satellites dudit dispositif de réduction entraîne en rotation un des plateaux à dentures trapézoïdales de l'accouplement, et au moins une couronne dudit dispositif de réduction, qui est fixée à un carter de la turbomachine par l'intermédiaire d'un support déformable axialement, permet un recul axial dudit dispositif de réduction selon lequel ladite couronne, dès lors que les plateaux de l'accouplement sont séparés suite à la rupture des vis fusibles, accompagne le recul dudit porte-satellites sur ledit planétaire,
- le porte-satellites dudit dispositif de réduction comporte des perçages qui sont agencés en regard des perçages dudit plateau, lesdits perçages traversant ledit porte-satellites et étant configurés pour recevoir les extrémités de filetages des vis fusibles, les écrous de serrage des vis fusibles, et pour permettre le passage d'un outil de serrage desdits écrous au travers desdits perçages,
- la turbomachine comporte des moyens de rétention des vis fusibles,
- les vis fusibles sont aptes à être rompues dès lors que l'accouplement de type curvic est soumis à un couple résistant supérieur ou égal à un couple de découplage correspondant à un couple résistant exercé par la soufflante sur le dispositif de réduction de vitesse en cas de perte d'au moins une pale de la soufflante entraînée par ledit arbre de soufflante,
- les vis fusibles sont aptes à être rompues dès lors que l'accouplement de type curvic est soumis à un couple résistant supérieur ou égal à un couple de découplage correspondant à un couple résistant exercé par le dispositif de réduction de vitesse sur l'arbre de soufflante et correspondant à un cas de grippage dudit dispositif de réduction,

L'invention sera mieux comprise, et d'autres buts, détails, caractéristiques et avantages de celle-ci apparaîtront plus clairement au cours de la description explicative détaillée qui va suivre, d'un mode de réalisation de l'invention donné à titre d'exemple purement illustratif et non limitatif, en référence aux dessins schématiques annexés dans lesquels :
- la figure 1 est une vue d'ensemble d'une turbomachine selon un état antérieur de la technique ;
- la figure 2 est vue schématique en coupe de la partie avant d'une turbomachine selon l'invention;
- la figure 3 est une vue en perspective d'un accouplement de type curvic mis en oeuvre dans l'invention,
- la figure 4 est une vue de détail de l'accouplement de type curvic mis en œuvre dans l'invention préalablement à son découplage,
- la figure 5 est une vue de détail de l'accouplement de type curvic mis en oeuvre dans l'invention préalablement à son découplage en cours de découplage,
- la figure 6 est une vue de détail d'un support d'un dispositif de réduction mis en oeuvre dans l'invention,
- la figure 7 est une vue en bout d'un dispositif de réduction mis en oeuvre dans l'invention,
- la figure 8 est une de détail en perspective d'un dispositif de réduction mis en oeuvre dans l'invention,
- la figure 9 est une vue en coupe d'une variante d'un dispositif de réduction mis en oeuvre dans l'invention, et
- la figure 10 est un diagramme illustrant le couple résistant exercé par un arbre de soufflante de la turbomachine sur le dispositif de réduction de vitesse en fonction du temps lors de la perte d'une pale de la soufflante.

Dans la description qui va suivre, des chiffres de référence identiques désignent des pièces identiques ou ayant des fonctions similaires.

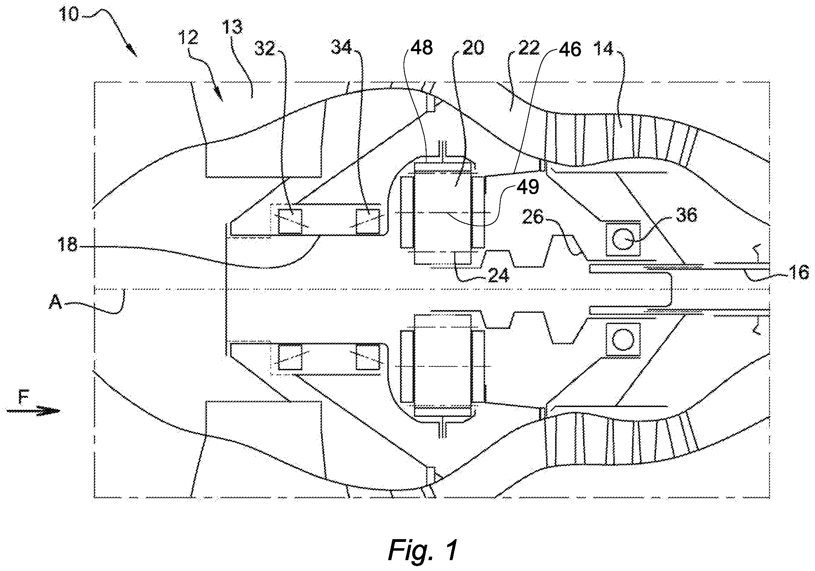

On a représenté à la figure 1 une turbomachine telle qu'un turboréacteur 10 réalisé selon un état antérieur de la technique. De manière connue, le turboréacteur 10 comporte, d'amont en aval selon le flux "F" d'écoulement des gaz, une soufflante 12, un compresseur basse pression 14, un compresseur haute pression, une chambre de combustion, une turbine haute pression et une turbine basse pression (non représentés). La soufflante 12 comporte des pales 13. Le compresseur haute pression et la turbine haute pression sont reliés par un arbre haute pression et forment avec lui un corps haute pression. Le compresseur basse pression 14 et la turbine basse pression sont reliés par un arbre basse pression 16 et forment avec lui un corps basse pression. La soufflante 12 est, quant à elle, portée par un arbre de soufflante 18 qui, dans l'exemple représenté, est lié en rotation à l'arbre BP 16, par l'intermédiaire d'un dispositif de réduction 20 de la vitesse de rotation entre les deux arbres 16, 18.

En effet, il est intéressant de faire tourner la soufflante 12 à une vitesse de rotation inférieure à celle de l'arbre BP 16, notamment lorsque celle-ci est de très grande dimension, dans le but de mieux l'adapter aérodynamiquement.

Les arbres HP et BP 16 s'étendent suivant un axe "A" de rotation du turboréacteur 10.

Le turboréacteur 10 comprend également, classiquement, un carter de soufflante (non représenté) qui permet de canaliser les gaz aspirés par la soufflante 12 vers une veine 22 de flux primaire, qui traverse les corps BP et HP, et une veine de flux secondaire (non représentée) qui enveloppe un carter des corps BP et HP et rejoint la veine de flux primaire dans une tuyère (non représentée) du turboréacteur.

Comme l'illustre la figure 1, le dispositif de réduction 20 est positionné entre l'arbre 18 de soufflante et l'arbre BP 16. Ce dispositif de réduction, par exemple de type épicycloïdal, est représenté sous la forme schématique de rectangles ne montrant que son encombrement. Il est, de manière non limitative de l'invention, entraîné par un pignon planétaire 24 (représenté par la trace de ses dentures) porté par un arbre d'entrée 26 qui est lié en rotation à l'arbre BP 16, l'arbre 16 étant, à titre d'exemple uniquement, reçu sans jeu par emmanchement dans l'arbre 26. Il comporte aussi, un porte-satellites 49 (représenté par l'axe de ses satellites) solidaire d'un carter 46 de la turbomachine, et une couronne 48 qui entraîne l'arbre 18 de la soufflante 12.

Dans cette configuration, il peut survenir qu'un couple résistant vienne à s'exercer entre l'arbre 18 de la soufflante 12 et le dispositif de réduction 20. Ce type de situation peut se produire lorsque la soufflante 12 perd une pale 13, par exemple en cas d'ingestion d'un corps étranger tel qu'un oiseau ou par suite d'une rupture en fatigue résultant d'une maintenance inadaptée. Ce phénomène, aussi connu sous le vocable anglo-saxon appelé de « Fan Blade Out » (FBO) provoque une excentration de la soufflante 12 par rapport à l'axe "A", qui a pour conséquence de provoquer un contact des extrémités de ses pales 13 avec le carter (non représenté) de la soufflante 12. Ce contact peut freiner brutalement la soufflante 12 alors même que le dispositif de réduction 20 et l'arbre de turbine BP 16 sont toujours entraînés par la turbine BP, ce qui peut créer un couple de torsion élevé dans l'arbre de turbine BP 16 et dans le dispositif de réduction 20.

Un tel couple de torsion en cas de perte d'une pale 13 risque d'endommager gravement le dispositif de réduction 20, qui pourrait alors se bloquer et rendre la rotation de la soufflante impossible 12.

Ce type de situation peut aussi se produire en cas de grippage ou de blocage du dispositif de réduction, dont la sortie peut se retrouver inopinément bloquée ou freinée alors même que la soufflante est encore sous l'effet de son inertie. Il peut s'ensuivre une rupture de l'arbre de soufflante 18 entraînant à son tour une excentration de la soufflante, puis un blocage de celle-ci.

Dans les deux cas, un blocage de la soufflante 12 aurait pour conséquence d'augmenter brutalement la trainée aérodynamique du moteur, rendant l'avion impossible à piloter.

Pour remédier à cet inconvénient, il a déjà été proposé dans l'état de la technique des dispositifs de découplage agencés entre l'arbre de soufflante 18 et le dispositif de réduction 20. Toutefois ceux-ci sont exclusivement prévus pour se déclencher en cas de perte d'une aube, notamment du fait de l'apparition d'un balourd causé par la perte de cette aube, et non pas en cas de blocage ou de grippage du dispositif de réduction. De ce fait, ils n'apportent qu'une protection limitée à la chaîne cinématique.

Pour remédier à cet inconvénient, une solution consiste à limiter le couple de torsion susceptible de s'exercer entre l'arbre de soufflante 18 et le dispositif de réduction 20, quelle que soit l'origine de son apparition.

La limitation du couple de torsion présente un autre avantage, qui est de permettre d'éviter un surdimensionnement des organes du dispositif de réduction 20 ou de l'arbre de soufflante 18 afin d'assurer leur résistance à un tel couple de torsion lors du dépassement d'un couple résistant déterminé. Un dispositif de découplage s'exerçant entre le dispositif de réduction de vitesse 20 et l'arbre de soufflante 18 permet d'éviter tout surdimensionnement des organes internes du dispositif de réduction 20 et de l'arbre 18 de soufflante, et par conséquent de réduire la masse et l'inertie du dispositif de réduction 20 et de l'arbre 18 de soufflante.

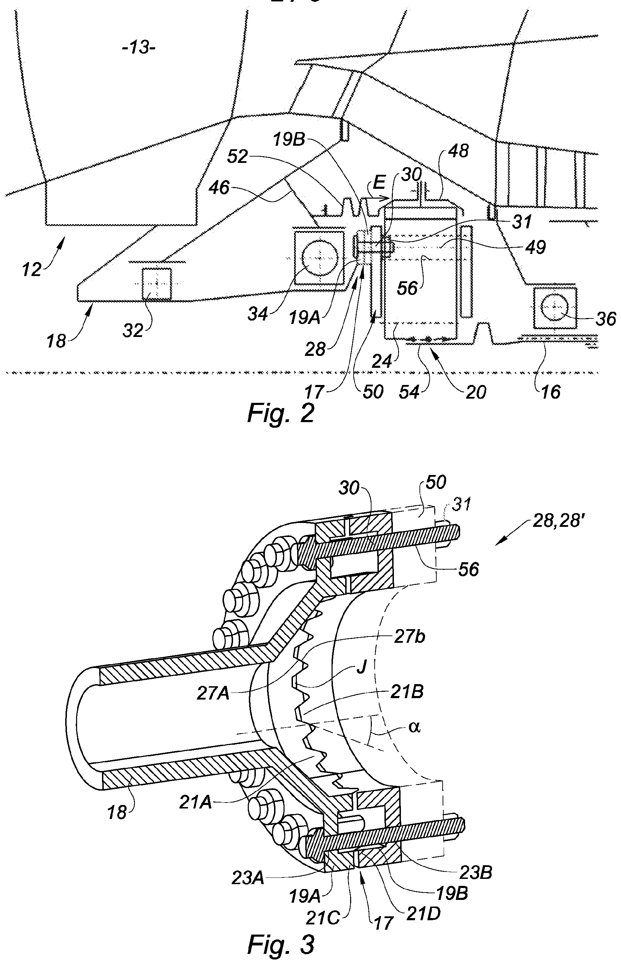

Dans ce but, comme l'illustre la figure 2, l'invention propose une turbomachine 10 du type décrit précédemment comportant des moyens de découplage 28 entre le dispositif de réduction 20 et l'arbre de soufflante 18 et dans laquelle le dispositif de réduction 20 est accouplé à l'arbre de soufflante 18 par l'intermédiaire d'un accouplement 17 à dentures trapézoïdales de type curvic qui comporte ces moyens de découplage 28. Les moyens de découplage 28 sont configurés pour découpler le dispositif 20 de réduction et l'arbre 18 de soufflante en réponse au dépassement d'un couple résistant déterminé C_{D} dit couple de découplage s'exerçant entre l'arbre de soufflante 18 et le dispositif 20 de réduction.

Plus particulièrement, comme l'illustre la figure 2, l'accouplement 17 à dentures trapézoïdales de type curvic est interposé entre un flasque de sortie 50 du dispositif de réduction 20 et l'arbre 18 de soufflante. Comme l'illustre la figure 3, il comporte deux plateaux d'accouplements dentés 19A, 19B, à savoir le plateau 19A solidaire de l'arbre de soufflante 18 et le plateau 19B lié en rotation au flasque de sortie 50 du dispositif de réduction 20. Les plateaux 19A, 19B comportent respectivement chacun deux jeux coaxiaux de dentures trapézoïdales. Le plateau 19A comporte un jeu de dentures intérieures 21A et un jeu de dentures extérieures 21C, et le plateau 19B comporte un jeu de dentures intérieures 21B et un jeu de dentures extérieures 21D. Les dentures intérieures 21A et 21B engrènent l'une avec l'autre et les dentures extérieures 21C, 21D engrènent l'une avec l'autre. La direction de la hauteur des trapèzes correspondants des dentures 21A, 21B, 21C, 21D s'étend parallèlement à la direction axiale.

Les dentures 21A, 21B, 21C, 21D ont des plans inclinés agencés au contact les uns des autres. Sur la figure 3, on a représenté les plans 27A, 27B des dentures 21A, 21B, inclinés selon un angle α. Les plateaux 19A, 19B sont réunis l'un à l'autre par l'intermédiaire de vis axiales 30 axiales fusibles 30 qui traversent des perçages 23A, 23B disposés sensiblement selon un rayon intermédiaire R des plateaux 19A, 19B entre les dentures 21A, 21B d'une part et 21C, 21D d'autre part. Avantageusement, les vis 30 axiales fusibles traversent aussi le flasque de sortie 50 et permettent sa liaison en rotation au plateau 19B au moyens d'écrous 31 qui serrent le flasque de sortie 50 contre le plateau 19B. L'angle α est choisi préférentiellement dans un intervalle compris entre 20° et 70° par rapport à l'axe moteur, encore plus préférentiellement entre 20° et 40°.

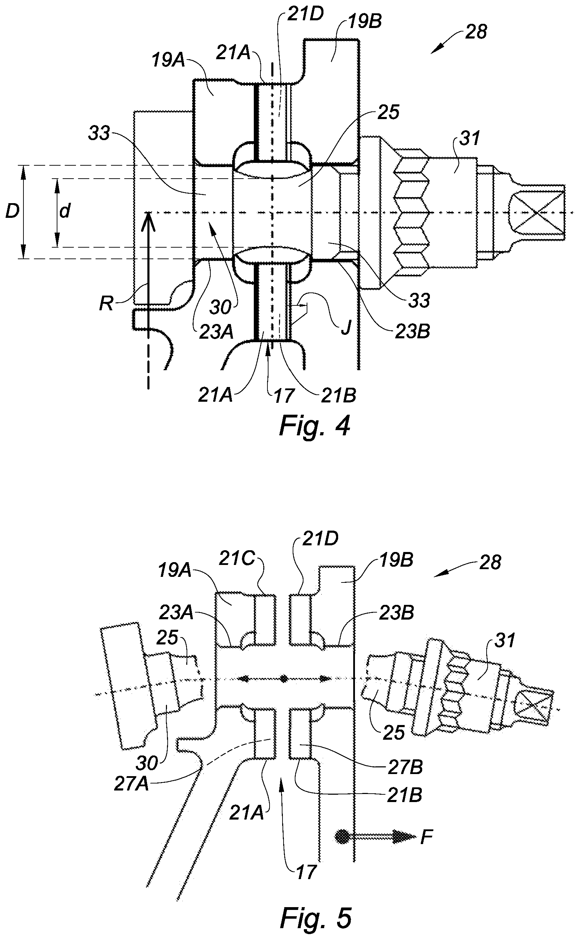

Comme l'illustrent les figures 3 et 4, un jeu fonctionnel J est agencé entre les extrémités des dentures 21A et les fonds des dentures 21B pour garantir un bon contact entre les plans inclinés 27A, 27B.

En variante, chacun des plateaux 19A, 19B pourrait ne comporter, au lieu de deux jeux de dentures coaxiaux, qu'un unique jeu de dentures traversé par des vis fusibles analogues aux vis 31.

On remarquera, que en variante, le plateau 19B et le flasque 50 peuvent être confondus et former une seule et même pièce.

Plus particulièrement, comme l'illustre la figure 4, les vis axiales fusibles 30 comportent chacune un tronçon 25 de diamètre réduit "d" formant amorce de rupture en traction disposé entre deux tronçons 33 de diamètre principal "D". Comme représenté à la figure 3, lorsqu'un tel accouplement est soumis à un couple de torsion entre ses deux plateaux 19A, 19B, les dentures trapézoïdales 21A, 21B, 21C, 21D transforment, de par leurs plans inclinés 27A, 27B, les efforts résultant du couple de torsion en effort axial résultant F entre les plateaux 19A, 19B et qui s'exerce sous la forme d'un effort de traction sur les vis 30, comme cela a été représenté à la figure 5. Cet effort de traction a pour conséquence de provoquer la rupture des vis 30 lorsqu'elles sont soumises à une sollicitation de traction au niveau de leurs tronçons 25 de diamètre réduit.

Il sera compris que des angles d'inclinaison α de plans inclinés 27A, 27B des dentures trapézoïdales 21A, 21B, des angles d'inclinaison α de plans inclinés des dentures trapézoïdales 21C, 21D, le nombre de vis fusibles diamètre "d" des tronçons 25 de rupture et le diamètre "D" des tronçons 33 de diamètre principal "D" des vis fusibles, ainsi qu'un couple de serrage desdites vis fusibles 30 par les écrous 31 sont calculés au préalable lors de la conception du dispositif de découplage de manière que leur configuration permette la rupture de ces vis fusibles dès lors qu'un couple exercé entre les plateaux de l'accouplement 19A, 19B excède le couple de découplage C_{D}.

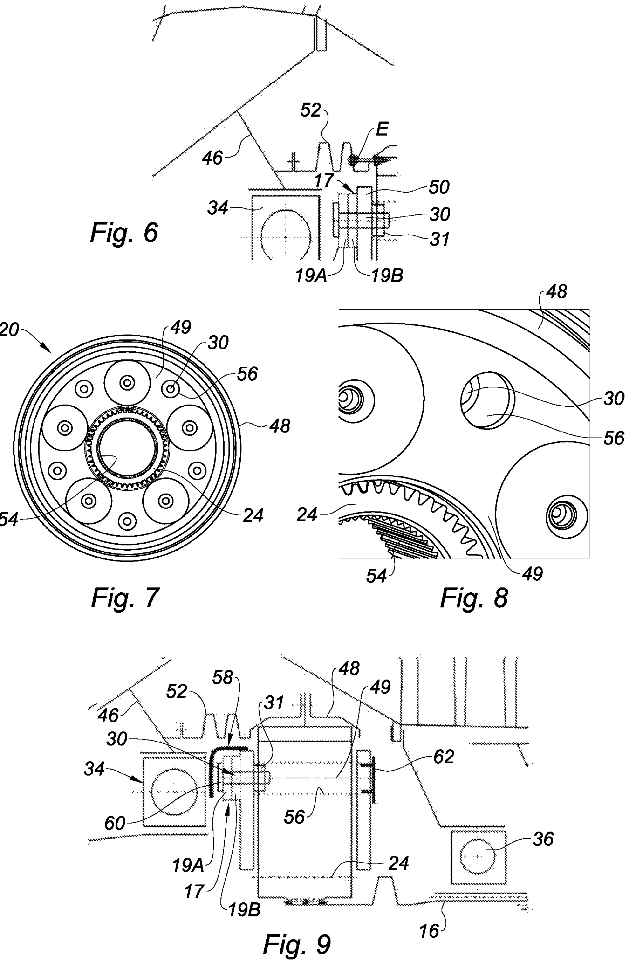

Comme l'illustre la figure 2, le dispositif de réduction 20 est lié à un carter 46 de la turbomachine par au moins un de ses organes. Par exemple, de manière non limitative de l'invention, comme l'illustre la figure 9, une couronne 48 du dispositif de réduction 20 est liée au carter 46 par l'intermédiaire d'un support 52 déformable axialement, tandis qu'un porte-satellites 49 du dispositif de réduction 20 est accouplé à l'arbre 18 de soufflante et qu'un planétaire 24 est accouplé à l'arbre 16 de turbine.

Il sera compris que cette disposition n'est pas limitative de l'invention et que les éléments du dispositif de réduction 20 pourraient être liés de manière différente au carter 46, à l'arbre 18 de soufflante, et à l'arbre 16 de turbine. Cette configuration permet de garantir qu'une fois que le dispositif de réduction 20 ait été découplé de l'arbre de turbine 16 et de l'arbre de soufflante 18, il demeure néanmoins maintenu dans le carter 46 de la turbomachine.

En particulier, la couronne 48 du dispositif de réduction 20 pourrait être liée à l'arbre 18 de soufflante, le porte-satellites 49 du dispositif de réduction 20 pourrait être lié au carter 44 de la turbomachine, tandis que le planétaire 24 serait accouplé à l'arbre 16 de turbine, similairement à la configuration de la figure 1.

De plus, dans le cas d'un dispositif de réduction 20 de type planétaire ou épicycloïdal, l'arbre d'entrée 26 est monté dans ce dispositif de réduction 20, c'est à dire ici dans le planétaire 24, par l'intermédiaire de cannelures 54. Le glissement des plans inclinés 27A, 27B des jeux de dentures écarte les plateaux 19A, 19B, et nécessite de ce fait un débattement axial du dispositif de réduction de vitesse 20.

Avantageusement, le dispositif de réduction 20 peut, par l'intermédiaire du jeu cannelures 54 interposé entre l'arbre d'entrée du dispositif de réduction 20 et le planétaire 24, et du support 52 de la couronne 48 qui se déforme pour accompagner la couronne 48 du dispositif de réduction 20, reculer axialement, comme l'illustre la flèche "E" des figures 2 et 6. Ce mouvement, initié dès que l'accouplement 17 est soumis à un couple, se poursuit après la rupture des vis 30 afin de permettre un recul axial plus important du dispositif de réduction 20, et ce faisant, l'écartement du flasque 50 et de l'arbre de soufflante 18.

Cette configuration est particulièrement avantageuse car, en permettant le recul du dispositif de réduction, elle permet d'éviter toute sollicitation sur l'arbre 18 de la soufflante 12. De ce fait, il n'est pas besoin de prévoir de palier de découplage pour cet arbre 18, qui peut demeurer tournant sur des paliers ordinaires.

Une fois découplée, la soufflante 12 est soumise à une vitesse de rotation libre ou "windmilling" qui permet au turboréacteur de ne produire qu'une traînée réduite, permettant ainsi de conserver une certaine maniabilité à l'avion équipé de la turbomachine.

Dans le cas particulier d'un dispositif de réduction de vitesse 20 de type planétaire ou épicycloïdal dans lequel le porte-satellites 49 entraîne un des plateaux 19B à dentures trapézoïdales de l'accouplement 17, il est possible de prévoir un agencement compact des vis 30. A cet effet, Comme l'illustrent les figures 7 et 8, le porte-satellites comporte des perçages 56 qui sont agencés en regard des perçages 23B du plateau 19B. Ces perçages 56 traversant le porte-satellites 49 et ils sont configurés pour recevoir les extrémités de filetages des vis fusibles 30 et les écrous 31 de serrage des vis fusibles, et surtout pour permettre le passage d'un outil de serrage de écrous 31 au travers des perçages 56. Ainsi, un opérateur en charge du montage de la turbomachine peut-il serrer très simplement les écrous 31 en insérant une clé à pipe dans les perçages 56 du côté du dispositif de réduction 20 opposé au flasque 50.

Selon une variante de l'invention, la turbomachine comporte des moyens de rétention des vis fusibles 30. De préférence, comme l"illustre la figure 7, ces moyens comportent un flasque 58 solidaire du plateau 19A de l'accouplement curvic, qui est destiné immobiliser les têtes 60 des vis 30 après leur rupture. Du côté opposé les perçages 56 du porte-satellites 49 reçoivent des obturateurs 62 destinés à empêcher le corps des vis 30 de sortir de ces perçages.

Il sera compris que cette configuration n'est pas limitative de l'invention et que d'autres moyens de rétention peuvent être utilisés.

Dans le mode de réalisation préféré de l'invention, la rupture des vis fusibles 30 des moyens de découplage 28 peut être prévue a minima et ce, dès la perte d'une seule pale 13. Cette configuration n'est pas limitative de l'invention et la perte d'un nombre supérieur de pales pourrait être tolérée.

Inversement, si il est prévu que la rupture des vis fusibles 30 ne survienne qu'en cas de rupture ou de perte d'une pale 13, il est prévu que cette rupture ne survienne pas en cas de simple ralentissement de la soufflante 12.

Ainsi, il est prévu que le couple résistant C_{D} déterminé soit strictement supérieur à tout couple correspondant à un couple résistant exercé par la soufflante 12 sur le dispositif 20 de réduction de vitesse, en cas d'ingestion d'un oiseau sans perte de pale par ladite soufflante 12. Un tel évènement peut en effet produire un effort tangentiel ralentissant la soufflante 12, mais ne risque pas d'endommager le dispositif de réduction 20 ni l'arbre 18. Dans ce cas, la survenance d'un évènement comme l'ingestion d'un oiseau ne provoque pas la rupture des vis fusibles 30.

La rupture est en revanche prévue pour un évènement correspondant à un pourcentage déterminé du couple maximum auquel est soumis l'arbre 18 de la soufflante 12. Par exemple, il est possible de tarer le couple de rupture C_{D} pour répondre à la perte d'une pale, comme on l'a vu précédemment. Dans la configuration de la turbomachine précédemment mentionnée, ce couple C_{D} est alors situé dans une fourchette de 120% à 200% du couple maximum auquel est soumis l'arbre 18 de la soufflante 12.

Il est aussi possible de choisir un autre critère de rupture des vis 30, tel que par exemple un grippage un blocage du dispositif de réduction de vitesse 20. Dans ce cas, le couple C_{D} est situé dans une fourchette de 200% à 300% du couple C_{D} maximum auquel est soumis l'arbre 18 de la soufflante 12.

Les valeurs du couple C_{D} de découplage précédemment mentionnées dépendent du matériau de la soufflante. Sa valeur sera différente selon que la soufflante comporte des pales métalliques, ou des pales en matériau composite.

A titre d'exemple uniquement, et de manière non limitative de l'invention, on se place par exemple dans le cas d'une turbomachine ayant une poussée maximale entre 100kN et 300kN, avec une soufflante 12 d'un diamètre entre 2 et 3m, et un dispositif de réduction de vitesse ayant un rapport de réduction entre 2.5 et 5. Dans ce cas, Le couple maximal en sortie du dispositif de réduction de vitesse 20 est compris entre 50000 et 170000 N.

Dans cette configuration, de manière non limitative de l'invention, la valeur du couple de découplage déterminé dans les trois modes de réalisation du moyen 28 de découplage cas varie donc sensiblement entre 60000 N.m et 510000 N.m.

Il sera bien entendu compris que ces valeurs ne sont qu'indicatives et dépendent de l'architecture et du dimensionnement de la turbomachine.

Avantageusement, des moyens de détection du découplage du dispositif de réduction 20 et de l'arbre de soufflante 18 par le moyen de découplage 28 peuvent être prévus pour commander au minimum une réduction de vitesse de la turbine, voire un arrêt complet du turboréacteur.

Ainsi, il est possible de mesurer la vitesse du flasque 50 de sortie du dispositif de réduction de vitesse 20. Une détection de l'emballement de cette vitesse par rapport à celle de la soufflante 12 peut ainsi être interprétée comme un découplage et déclencher l'activation d'organes de régulation du moteur. Il est dès lors possible de limiter le débit de carburant pour faire chuter la vitesse de la turbine, et si l'on dispose d'une turbine comprenant un frein axial entre une partie de rotor et une partie de stator, d'activer ce frein pour ralentir et/ou arrêter la turbine.

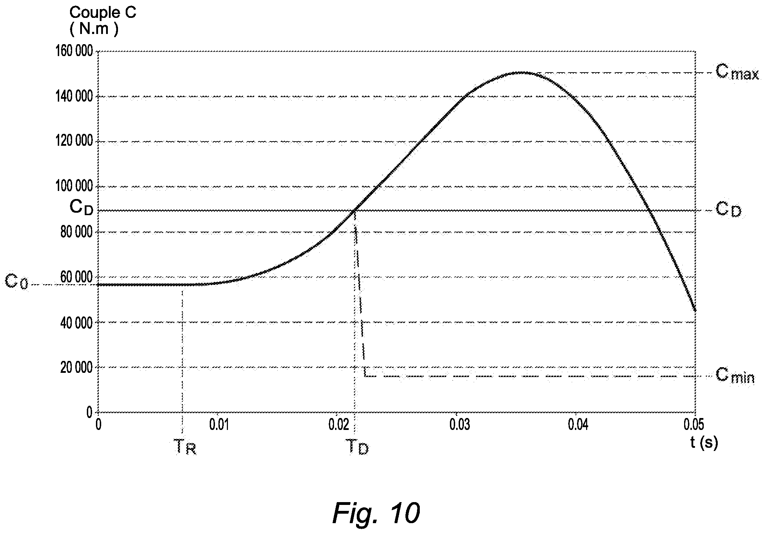

La figure 10 illustre de manière comparative le couple résistant "C" transmis, en ordonnées, en fonction du temps "t" en abscisses, en cas de rupture d'une pale 13 de soufflante.

Comme on peut le voir sur la courbe en traits forts, dans une turbomachine conventionnelle, à partir d'un couple de fonctionnement optimal C₀, il peut survenir à un instant T_{R} une rupture d'une pale 13. Cette rupture conduit à une augmentation du couple résistant jusqu'à une valeur limite Cₘₐₓ correspondant au blocage du dispositif 20 de réduction et de la soufflante 12, ou plus exactement à un risque de blocage selon les spécifications du dispositif de réduction, rendant celui-ci impropre à son utilisation.

Dans la turbomachine selon l'invention, le couple maximal est taré à un couple C_{D} ou couple de découplage. De ce fait, lors du fonctionnement, il peut aussi survenir à un instant T_{R} une rupture d'une pale 13, qui conduit à une augmentation du couple résistant jusqu'à la valeur C_{D} ou valeur de couple de découplage. Le couple décroit alors, selon la courbe en pointillés, jusqu'à une valeur Cₘᵢₙ correspondant à un état de libre rotation de la soufflante 12.

Il sera bien entendu compris que ces valeurs ne sont qu'indicatives et dépendent tant du type de pale utilisée, que de l'architecture et du dimensionnement du moteur.

Il sera compris que, lorsque le découplage survient du fait d'une perte de pale, à partir du moment où la soufflante 12 est découplée de l'arbre 16 de turbine, la turbine 16 n'est plus soumise à un couple résistant issu de ladite soufflante. Il y a donc un risque d'emballement de la turbine si le dispositif de réduction de vitesse 20 n'est pas désaccouplé, cet emballement entraînant le dispositif de réduction de vitesse 20 à des vitesses pour lesquelles il n'est pas prévu de fonctionner.

Ainsi, de préférence, la turbomachine ou turboréacteur 10 comporte des moyens de détection du découplage du dispositif de réduction 20 et de l'arbre de soufflante 18 aptes à commander au minimum une réduction de vitesse de la turbine, voire un arrêt complet du turboréacteur.

Ainsi, il est connu de mesurer la vitesse de l'arbre 18 de soufflante par un capteur de vitesse. Une détection de l'emballement de la vitesse mesurée peut ainsi être interprétée comme un découplage et déclencher l'activation d'organes de régulation du moteur. Il est dès lors possible de limiter le débit de carburant pour faire chuter la vitesse de la turbine, ou, si l'on dispose d'une turbine comprenant un frein axial entre une partie de rotor et une partie de stator, d'activer ce frein pour ralentir et/ou arrêter la turbine.

L'invention apporte donc une solution sécuritaire aux risques de survitesse d'une ligne cinématique de turbomachine, notamment en cas de rupture de pale de soufflante de la turbomachine ou de blocage dudit dispositif de réduction de vitesse. Le dispositif de découplage permet non seulement de protéger la liaison entre la soufflante et le dispositif de réduction de vitesse, mais également les éléments internes du dispositif de réduction de vitesse, mais aussi les éléments tournants placés en amont du réducteur selon le cheminement de la puissance motrice, à savoir l'arbre de compresseur BP, l'arbre de turbine BP et la turbine BP..

## Revendications

1. Turbomachine (10) comportant un arbre de soufflante (12) entraîné par un arbre de turbine (16) par l'intermédiaire d'un dispositif (20) de réduction de la vitesse de rotation, ladite turbomachine comportant des moyens (28) de découplage interposé entre le dispositif (20) de réduction et l'arbre (18) de soufflante, qui sont aptes à découpler le dispositif (20) de réduction et l'arbre (18) de soufflante, **caractérisée en ce que** le dispositif de réduction (20) est accouplé à l'arbre de soufflante par l'intermédiaire d'un accouplement (17) à dentures trapézoïdales de type curvic qui comporte deux plateaux d'accouplement (19A, 19B) dentés engrenant l'un avec l'autre, les dentures de l'accouplement à dentures trapézoïdales (17) de type curvic s'étendant axialement, et qui comporte lesdits moyens de découplage (28), lesdits moyens de découplage (28) étant formés de vis axiales fusibles (30) configurées pour découpler le dispositif (20) de réduction et l'arbre (18) de soufflante en réponse au dépassement d'un couple résistant déterminé (C_{D}) dit couple de découplage s'exerçant entre l'arbre de soufflante (18) et le dispositif (20) de réduction.

2. Turbomachine (10) selon la revendication précédente, **caractérisée en ce que** les plateaux (19A, 19B) comportent chacun deux jeux coaxiaux de dentures trapézoïdales (21A, 21B), et **en ce que** les vis (30) axiales fusibles traversent des perçages (23A, 23B) formés dans les plateaux (19A, 19B) et disposés sensiblement selon un rayon intermédiaire (R) entre les deux jeux (21A, 21B, 21C, 21D) coaxiaux de dentures.

3. Turbomachine (10) selon l'une des revendications 1 ou 2, **caractérisée en ce que** les vis axiales fusibles (30) comportent chacune un tronçon de diamètre réduit (d), formant amorce de rupture en traction et disposé entre deux tronçons principaux (33) de diamètre (D) supérieur audit tronçon (25) de diamètre réduit.

4. Turbomachine (10) selon la revendication 3, **caractérisée en ce que** des angles d'inclinaison (α) de plans inclinés (27A, 27B) des dentures trapézoïdales (21A, 21B, 21C, 21D), le nombre de vis fusibles (30), les diamètres (d, D) des tronçons de rupture (25) et principal (33) des vis fusibles (30), et un couple de serrage desdites vis fusibles (30) sont configurés pour permettre la rupture desdites vis fusibles (30) dès lors qu'un couple exercé entre les plateaux (19A, 19B) de l'accouplement excède le couple de découplage (C_{D}).

5. Turbomachine (10) selon l'une des revendications 1 à 4, **caractérisée en ce que** le dispositif de réduction (20) est un réducteur de type épicycloïdal, **en ce qu'**un planétaire (24) est entraîné en rotation par un arbre de turbine (16) de la turbomachine, **en ce qu'**au moins un porte-satellites (49) dudit dispositif de réduction (20) entraîne en rotation un des plateaux (19B) à dentures trapézoïdales de l'accouplement, et **en ce qu'**au moins une couronne (48) dudit dispositif de réduction, qui est fixée à un carter (46) de la turbomachine par l'intermédiaire d'un support déformable (52) axialement, permet un recul axial dudit dispositif de réduction (20) selon lequel ladite couronne (48), dès lors que les plateaux (19A, 19B) de l'accouplement (17) sont séparés suite à la rupture des vis fusibles (30), accompagne le recul dudit porte-satellites (49) sur ledit planétaire (24).

6. Turbomachine (10) selon la revendication précédente, **caractérisée en ce que** le porte-satellites (49) dudit dispositif de réduction (20) comporte des perçages (56) qui sont agencés en regard des perçages (23B) dudit plateau (19B), lesdits perçages (56) traversant ledit porte-satellites (49) et étant configurés pour recevoir les extrémités de filetages des vis fusibles (30), les écrous (31) de serrage des vis fusibles (30), et pour permettre le passage d'un outil de serrage desdits écrous (31) au travers desdits perçages (56).

7. Turbomachine (10) selon l'une des revendications 1 à 6, **caractérisée en ce qu'**elle comporte des moyens de rétention (58, 60) des vis fusibles (30).

8. Turbomachine (10) selon l'une des revendications 1 à 7, **caractérisée en ce que** les vis fusibles (30) sont aptes à être rompues dès lors que l'accouplement de type curvic est soumis à un couple résistant supérieur ou égal à un couple (C_{D}) de découplage correspondant à un couple résistant exercé par la soufflante (12) sur le dispositif de réduction de vitesse (20) en cas de perte d'au moins une pale (13) de la soufflante (12) entraînée par ledit arbre (18) de soufflante (12).

9. Turbomachine (10) selon l'une des revendications 1 à 7, **caractérisée en ce que** les vis fusibles (30) sont aptes à être rompues dès lors que l'accouplement de type curvic (17) est soumis à un couple résistant supérieur ou égal à un couple (C_{D}) de découplage correspondant à un couple résistant exercé par le dispositif de réduction de vitesse (20) sur l'arbre (18) de soufflante et correspondant à un cas de blocage dudit dispositif de réduction (20).

## Patentansprüche

1. Turbomaschine (10), eine Gebläse (12) eine welle umfassend, die von einer Turbinenwelle (16) über eine Vorrichtung (20) zur Verringerung der Drehgeschwindigkeit angetrieben wird, wobei die Turbomaschine Mittel (28) zum Entkoppeln umfasst, die zwischen der Vorrichtung (20) zur Verringerung und der Gebläsewelle (18) eingesetzt sind, die imstande sind, die Vorrichtung (20) zur Verringerung und die Gebläsewelle (18) zu entkoppeln, **dadurch gekennzeichnet, dass** die Vorrichtung zur Verringerung (20) über eine Kupplung (17) mit Trapezverzahnungen vom Typ Curvic, die zwei verzahnte Kupplungsplatten (19A, 19B) umfasst, die ineinander eingreifen, an die Gebläsewelle gekoppelt ist, wobei sich die Verzahnungen der Kupplung mit Trapezverzahnungen (17) vom Typ Curvic axial erstrecken, und die Mittel zum Entkoppeln (28) umfasst, wobei die Mittel zum Entkoppeln (28) aus axialen Sicherungsschrauben (30) gebildet werden, die konfiguriert sind, um die Vorrichtung (20) zur Verringerung und die Gebläsewelle (18) als Reaktion auf eine Überschreitung eines bestimmten, Entkopplungsdrehmoment genannten, Widerstandsdrehmoments (C_{D}) zu entkoppeln, das zwischen der Gebläsewelle (18) und der Vorrichtung (20) zur Verringerung anliegt.

2. Turbomaschine (10) nach dem vorstehenden Anspruch, **dadurch gekennzeichnet, dass** die Platten (19A, 19B) jeweils zwei koaxiale Trapezverzahnungsspiele (21A, 21B) umfassen und dadurch, dass die axialen Sicherungsschrauben (30) Bohrungen (23A, 23B) durchqueren, die in den Platten (19A, 19B) gebildet werden und im Wesentlichen gemäß einem Zwischenradius (R) zwischen den beiden koaxialen Verzahnungsspielen (21A, 21B, 21C, 21D) angeordnet sind.

3. Turbomaschine (10) nach einem der Ansprüche 1 oder 2, **dadurch gekennzeichnet, dass** die axialen Sicherungsschrauben (30) jeweils einen Abschnitt mit verringertem Durchmesser (d) umfassen, der eine Zugsollbruchstelle bildet und zwischen zwei Hauptabschnitten (33) mit größerem Durchmesser (D) als der Abschnitt (25) mit verringertem Durchmesser angeordnet sind.

4. Turbomaschine (10) nach Anspruch 3, **dadurch gekennzeichnet, dass** Neigungswinkel (α) geneigter Ebenen (27A, 27B) der Trapezverzahnungen (21A, 21B, 21C, 21D), die Anzahl von Sicherungsschrauben (30), die Durchmesser (d, D) der Bruch- (25) und Hauptabschnitte (33) der Sicherungsschrauben (30) und ein Anzugsdrehmoment der Sicherungsschrauben (30) konfiguriert sind, um den Bruch der Sicherungsschrauben (30) zu ermöglichen, sobald ein Drehmoment, das zwischen den Kupplungsplatten (19A, 19B) anliegt, das Entkopplungsdrehmoment (C_{D}) überschreitet.

5. Turbomaschine (10) nach einem der Ansprüche 1 bis 4, **dadurch gekennzeichnet, dass** die Vorrichtung zur Verringerung (20) ein Reduktor vom epizyklischen Typ ist, dadurch, dass ein Planetenrad (24) durch eine Turbinenwelle (16) der Turbomaschine in Drehung versetzt wird, dadurch, dass mindestens ein Planetenträger (49) der Vorrichtung zur Verringerung (20) eine der Platten (19B) mit Trapezverzahnung der Kupplung in Drehung versetzt, und dadurch, dass mindestens ein Kranz (48) der Vorrichtung zur Verringerung, der über einen axial verformbaren Träger (52) an einem Gehäuse (46) der Turbomaschine befestigt ist, einen axialen Rückstoß der Vorrichtung zur Verringerung (20) ermöglicht, bei dem der Kranz (48), sobald die Platten (19A, 19B) der Kupplung (17) nach dem Bruch der Sicherungsschrauben (30) getrennt sind, den Rückstoß des Planetenträgers (49) auf dem Planetenrad (24) begleitet.

6. Turbomaschine (10) nach dem vorstehenden Anspruch, **dadurch gekennzeichnet, dass** der Planetenträger (49) der Vorrichtung zur Verringerung (20) Bohrungen (56) umfasst, die gegenüber den Bohrungen (23B) der Platte (19B) angeordnet sind, wobei die Bohrungen (56) den Planetenträger (49) durchqueren und konfiguriert sind, um die Gewindeenden der Sicherungsschrauben (30), die Spannmuttern (31) der Sicherungsschrauben (30) aufzunehmen, und um den Durchgang eines Spannwerkzeugs der Muttern (31) durch die Bohrungen (56) zu ermöglichen.

7. Turbomaschine (10) nach einem der Ansprüche 1 bis 6, **dadurch gekennzeichnet, dass** sie Rückhaltemittel (58, 60) für die Sicherungsschrauben (30) umfasst.

8. Turbomaschine (10) nach einem der Ansprüche 1 bis 7, **dadurch gekennzeichnet, dass** die Sicherungsschrauben (30) imstande sind, gebrochen zu werden, sobald die Kupplung vom Typ Curvic einem Widerstandsdrehmoment ausgesetzt ist, das größer oder gleich einem Entkopplungsdrehmoment (C_{D}) ist, das einem Widerstandsdrehmoment entspricht, das durch das Gebläse (12) auf die Vorrichtung zur Verringerung der Geschwindigkeit (20) im Falle eines Verlustes mindestens einer Schaufel (13) des Gebläses (12) ausgeübt wird, die durch die Welle (18) des Gebläses (12) angetrieben wird.

9. Turbomaschine (10) nach einem der Ansprüche 1 bis 7, **dadurch gekennzeichnet, dass** die Sicherungsschrauben (30) imstande sind, gebrochen zu werden, sobald die Kupplung vom Typ Curvic (17) einem Widerstandsdrehmoment unterworfen wird, das größer oder gleich einem Entkopplungsdrehmoment (C_{D}) ist, das einem Widerstandsdrehmoment entspricht, das durch die Vorrichtung zur Verringerung der Geschwindigkeit (20) auf die Gebläsewelle (18) ausgeübt wird, und einem Fall einer Blockade der Vorrichtung zur Verringerung (20) entspricht.

## Claims

1. Turbine engine (10) comprising a fan (12) shaft driven by a turbine shaft (16) by means of a rotational speed reduction device (20), said turbine engine comprising decoupling means (28) interposed between the reduction device (20) and the fan shaft (18), which are able to decouple the reduction device (20) and the fan shaft (18), **characterised in that** the reduction device (20) is coupled to the fan shaft by means of a coupling (17) having trapezoidal teeth of the curvic type which comprises two toothed coupling plates (19A, 19B) meshing with one another, the teeth of the coupling (17) having trapezoidal teeth of the curvic type extending axially, and which comprises said decoupling means (28), said decoupling means (28) being formed of fusible axial screws (30) configured to decouple the reduction device (20) and the fan shaft (18) in response to a predetermined resistive torque (C_{D}), referred to as the decoupling torque, which acts between the fan shaft (18) and the reduction device (20).

2. Turbine engine (10) according to the preceding claim, **characterised in that** the plates (19A, 19B) each comprise two coaxial sets of trapezoidal teeth (21A, 21B), and **in that** the fusible axial screws (30) pass through bore holes (23A, 23B) formed in the plates (19A, 19B) and arranged substantially along an intermediate radius (R) between the two coaxial sets (21A, 21B, 21C, 21D) of teeth.

3. Turbine engine (10) according to one of claims 1 or 2, **characterised in that** the fusible axial screws (30) each comprise a section of reduced diameter (d), forming tensile fracture initiation and arranged between two main sections (33) with a diameter (D) greater than said section (25) of reduced diameter.

4. Turbine engine (10) according to claim 3, **characterised in that** tilt angles (α) of inclined planes (27A, 27B) of the trapezoidal teeth (21A, 21B, 21C, 21D), the number of fusible screws (30), the diameters (d, D) of the fracture (25) and main (33) sections of the fusible screws (30), and a tightening torque of said fusible screws (30) are configured to allow for the fracture of said fusible screws (30) when a torque exerted between the plates (19A, 19B) of the coupling exceeds the decoupling torque (C_{D}).

5. Turbine engine (10) according to one of claims 1 to 4, **characterised in that** the reduction device (20) is a reduction gear of the epicyclic type, **in that** a planetary gear (24) is rotationally driven by a turbine shaft (16) of the turbine engine, **in that** at least one planetary carrier (49) of said reduction device (20) rotationally drives one of the plates (19B) with trapezoidal teeth of the coupling, and **in that** at least one crown (48) of said reduction device, which is fastened to a casing (46) of the turbine engine by means of an axially deformable support (52), allows for an axial retraction of said reduction device (20) according to which said crown (48), when the plates (19A, 19B) of the coupling (17) are separated following the fracture of the fusible screws (30), accompanies the retraction of said planetary carrier (49) on said planetary gear (24).

6. Turbine engine (10) according to the preceding claim, **characterised in that** the planetary carrier (49) of said reduction device (20) comprises bore holes (56) that are arranged facing bore holes (23B) of said plate (19B), said bore holes (56) passing through said planetary carrier (49) and being configured to receive the thread ends of the fusible screws (30), the lock nuts (31) of the fusible screws (30), and to allow for the passage of a tool for tightening said nuts (31) through said bore holes (56).

7. Turbine engine (10) according to one of claims 1 to 6, **characterised in that** it comprises means for retaining (58, 60) the fusible screws (30).

8. Turbine engine (10) according to one of claims 1 to 7, **characterised in that** the fusible screws (30) are able to be fractured when the coupling of the curvic type is subjected to a resistive torque greater than or equal to a decoupling torque (C_{D}) that corresponds to a resistive torque exerted by the fan (12) on the speed reduction device (20) in case of loss of at least one blade (13) of the fan (12) driven by said fan (12) shaft (18).

9. Turbine engine (10) according to one of claims 1 to 7, **characterised in that** the fusible screws (30) are able to be fractured when the coupling of the curvic type (17) is subjected to a resistive torque greater than or equal to a decoupling torque (C_{D}) corresponding to a resistive torque exerted by the speed reduction device (20) on the fan shaft (18) and corresponding to a case of blocking of said reduction device (20).
